# EUROPEAN PATENT APPLICATION

(11) **EP 2 940 560 A1**
(43) Date of publication of application: **04.11.2015**
(21) Application number: 15164981.1
(22) Date of filing: 24.04.2015
(51) Int. Cl.: G06F 3/041, G06F 3/044

(54) **METHOD OF PRODUCING IN-CELL TOUCH PANEL AND IN-CELL TOUCH PANEL THEREOF**

(30) Priority: 29.04.2014 TW 103115415
(71) Applicant: ACER Inc., New Taipei City 22181 (TW)
(72) Inventor: Kuo, Jin-Ting, 22181 New Taipei City (TW)
(74) Representative: Altenburg, Bernardus Stephanus Franciscus

(57) **Abstract**

A method of producing an in-cell touch panel is disclosed. The method of producing an in-cell touch panel includes the following steps: providing a base layer (10) that includes an inner side (11); providing a light-shading layer (20) located on the inner side (11), wherein the light-shading layer (20) includes a light-shading area (21) and a plurality of holes (22); providing a plurality of metal lines (30, 30a) located on the light-shading area (21) and not covering the holes (22); providing a color filter film layer (40) located on the light-shading layer (20) and a portion of the metal lines (30); and providing a conductive film layer (50) located on the color filter film layer (40), the other portion of the metal lines (30a), and the light-shading layer (20).

## Description

### BACKGROUND OF THE INVENTION

### Field of the Invention

The present invention relates to a method of producing an in-cell touch panel; more particularly, the present invention relates to a method of producing in-cell touch panel that reduces the cost and produces an in-cell touch panel having high transmittance.

### Description of the Related Art

Many products with touch screens (such as tablet computers or smartphones) are conveniently portable and easy to use. Therefore, such products are popular with consumers. The touch screen of the prior art has an on-cell structure. In the process of producing the on-cell touch screen, a color resist layer and an indium tin oxide layer are attached to the outside of the color filter, wherein the outside surface is close to the touching surface. However, in one step of the current process of producing the on-cell touch screen, the color filter must be turned upside down, but turning the color filter upside down can easily cause damage to the color filter or to the color resist layer. Another problem is electrostatic discharge, which can decrease the manufacturing yield of the on-cell touch screen and increase the cost. Therefore, there is a need to develop an in-cell touch screen to avoid the problems inherent in the current process of producing the on-cell touch screen.

In the process of producing the in-cell touch screen, a black matrix layer, a metal wire mesh, and a color resist layer are attached to the inner side of the color filter, wherein the inner side is the surface away from the touching surface. The black matrix layer is used for covering the part that does not need to be transparent. The black matrix layer has a plurality of holes. The portion of the black matrix layer with holes is used for allowing the passage of light, and the portion without holes is used for blocking the passage of light to achieve the effect of covering the part that does not need to be transparent. However, the metal wire mesh of the prior art may block the holes of the black matrix, thereby reducing the light transmittance, such that the picture displayed by the touch screen may be blurred or roundish.

Therefore, there is a need to provide a new method of producing an in-cell touch panel of high transmittance and low cost.

### SUMMARY OF THE INVENTION

It is an object of the present invention to provide a method of producing in-cell touch panel having low thickness, high transmittance, and reduced cost.

To achieve the abovementioned object, the method of producing in-cell touch panel of the present invention includes the following steps: providing a base layer that includes an inner side; providing a light-shading layer located on the inner side, wherein the light-shading layer includes a light-shading area and a plurality of holes; providing a plurality of metal lines located on the light-shading area and not covering the holes; providing a color filter film layer located on the light-shading layer and a portion of the metal lines; providing a conductive film layer located on the color filter film layer, the other portion of the metal lines, and the light-shading layer.

According to one embodiment of the present invention, the plurality of metal lines form a plurality of conduction areas, and two of the plurality of conduction areas are separate from each other.

According to one embodiment of the present invention, the conductive film layer further includes a conductive film area and at least one bridge area, the conductive film area is separate from the least one bridge area, and the at least one bridge area is connected to the two separate conduction areas.

According to one embodiment of the present invention, the method of producing in-cell touch panel further includes providing a photo spacer unit, wherein the photo spacer unit is located on the conductive film layer.

According to one embodiment of the present invention, the photo spacer unit is located on the conductive film area.

Another object of the present invention is to provide an in-cell touch panel. The in-cell touch panel includes a base layer, a light-shading layer, a plurality of metal lines, a color filter film layer, and a conductive film layer. The base layer includes an inner side. The light-shading layer is located on the inner side, and the light-shading layer includes a light-shading area and a plurality of holes. The plurality of metal lines are located on the light-shading area and do not cover the plurality of holes. The color filter film layer is located on the light-shading layer and a portion of the metal lines. The conductive film layer covers the color filter film layer, the other portion of the metal lines, and the light-shading layer.

According to one embodiment of the present invention, the in-cell touch panel includes a photo spacer unit, and the photo spacer unit is located on the conductive film layer.

### BRIEF DESCRIPTION OF THE DRAWINGS

FIG. 1 illustrates a flowchart of the method of producing in-cell touch panel of one embodiment of the present invention.
FIG. 2 illustrates a schematic drawing of the base layer of one embodiment of the present invention.
FIG. 3 illustrates a top view drawing of the light-shading layer of one embodiment of the present invention.
FIG. 4 illustrates a schematic drawing of the light-shading layer and the base layer of one embodiment of the present invention.
FIG. 5 illustrates a top view drawing of the light-shading layer with the metal lines of one embodiment of the present invention.
FIG. 6 illustrates a schematic drawing of the light-shading layer with the metal lines of one embodiment of the present invention.
FIG. 7 illustrates a top view drawing of the color filter film layer that covers the metal lines and the light-shading layer of one embodiment of the present invention.
FIG. 8 illustrates a schematic drawing of the color filter film layer that covers the metal lines and the light-shading layer of one embodiment of the present invention.
FIG. 9 illustrates a top view drawing of the conductive film layer that covers the color filter film layer of one embodiment of the present invention.
FIG. 10 illustrates a schematic drawing of the conductive film layer that covers the color filter film layer of one embodiment of the present invention.
FIG. 11 illustrates a schematic drawing of the in-cell touch panel of one embodiment of the present invention.
FIG. 12 illustrates a circuit structure of the touch electronic device of one embodiment of the present invention.

### DETAILED DESCRIPTION OF THE PREFERRED EMBODIMENT

These and other objects and advantages of the present invention will become apparent from the following description of the accompanying drawings, which disclose a preferred embodiment of the present invention. It is to be understood that the drawings are to be used for purposes of illustration only, and not as a definition of the invention.

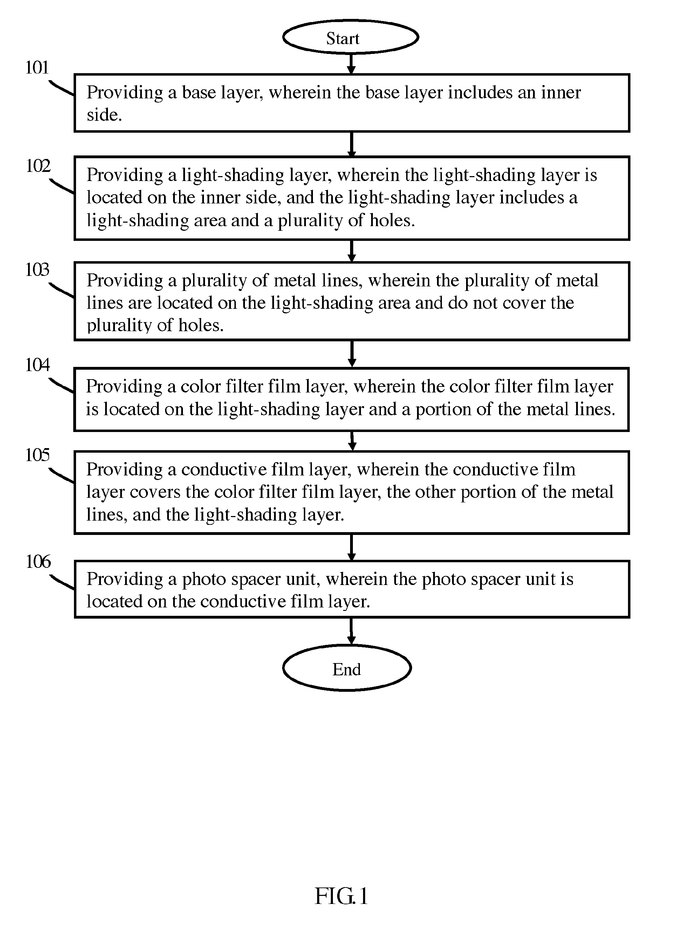

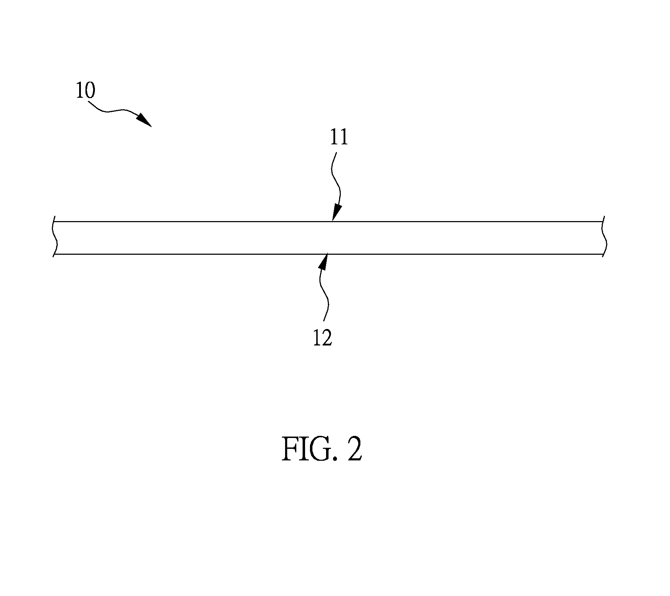

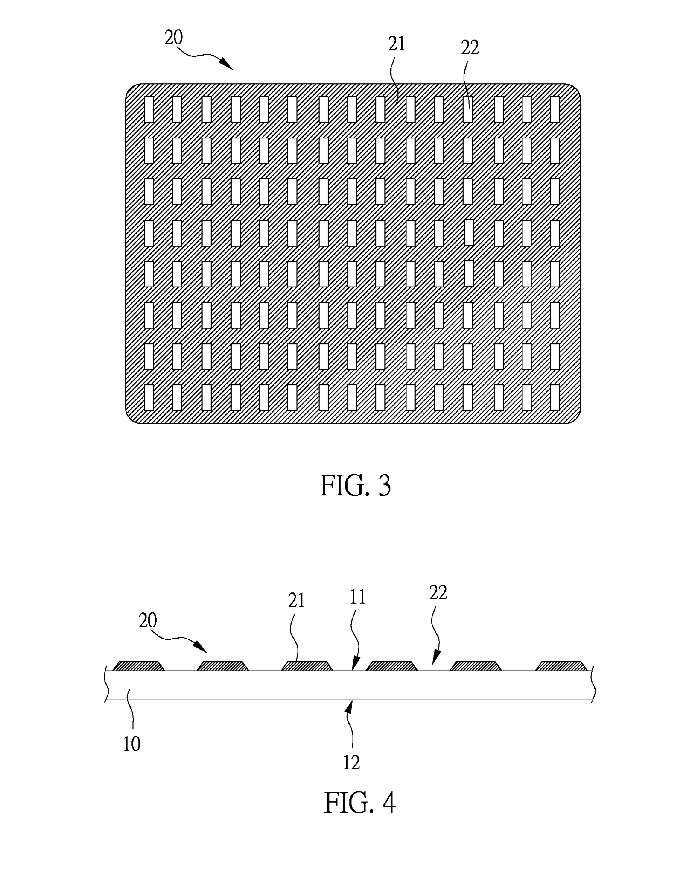

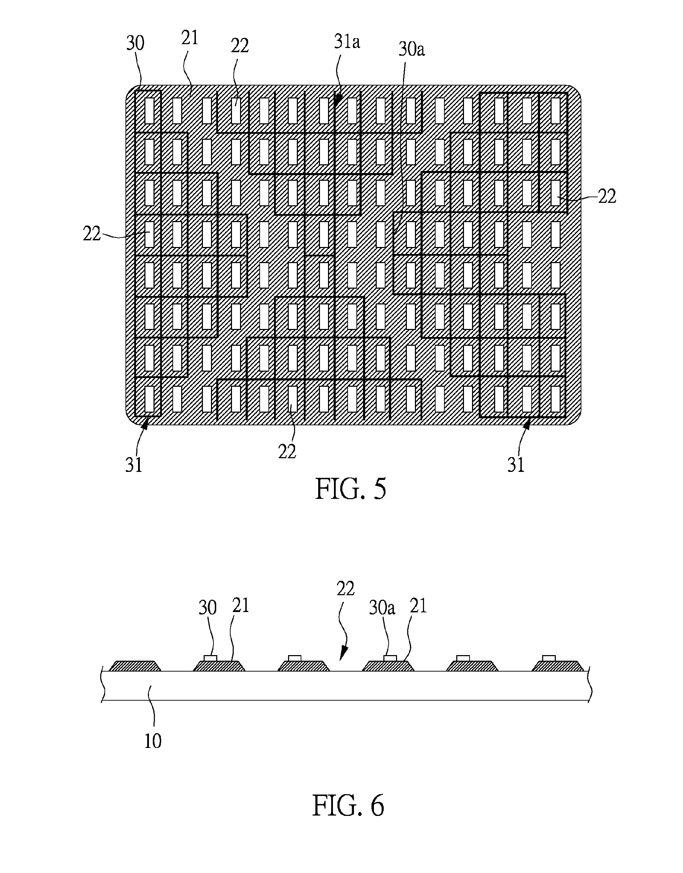

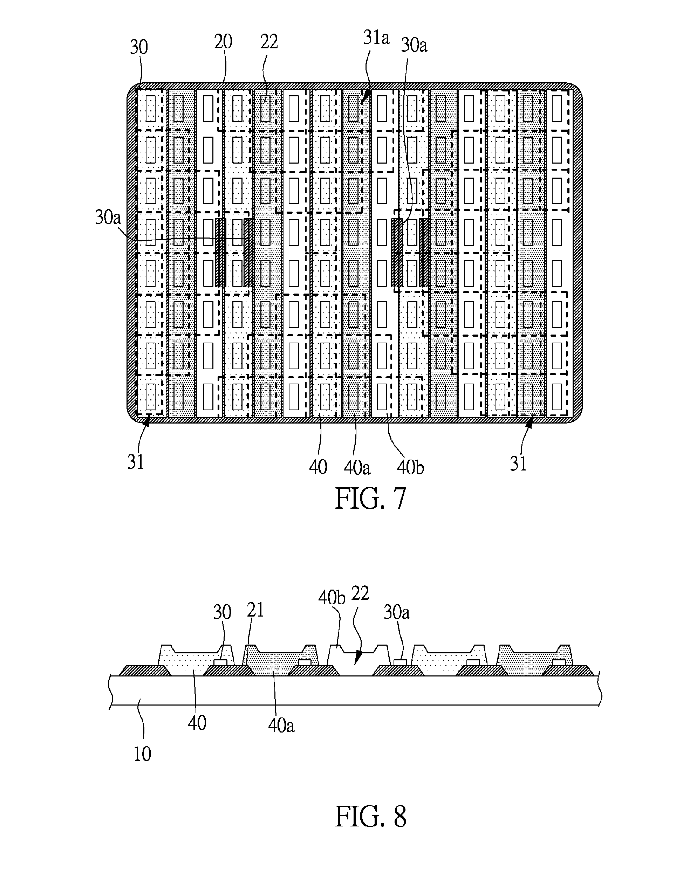

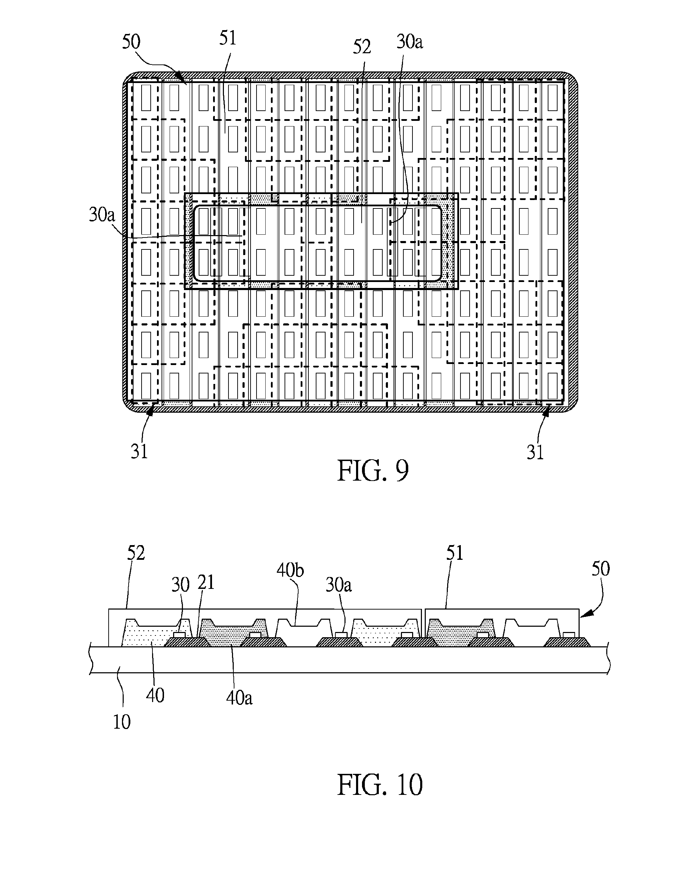

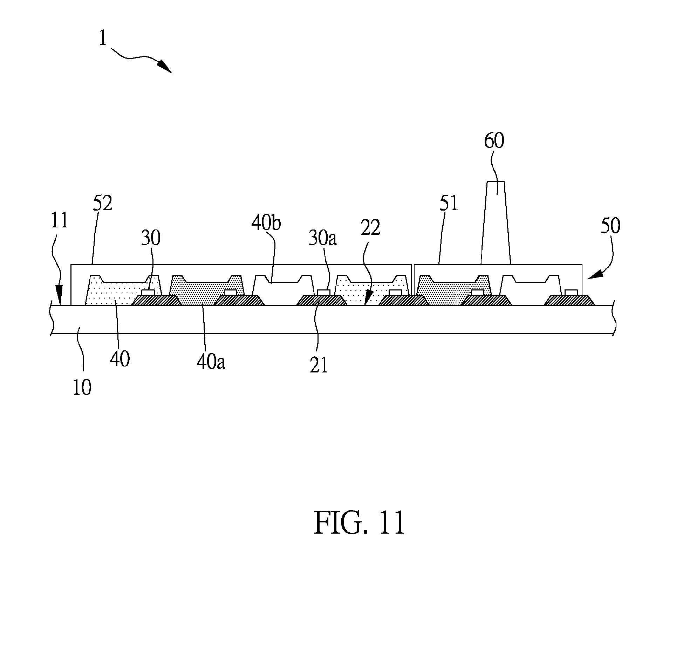

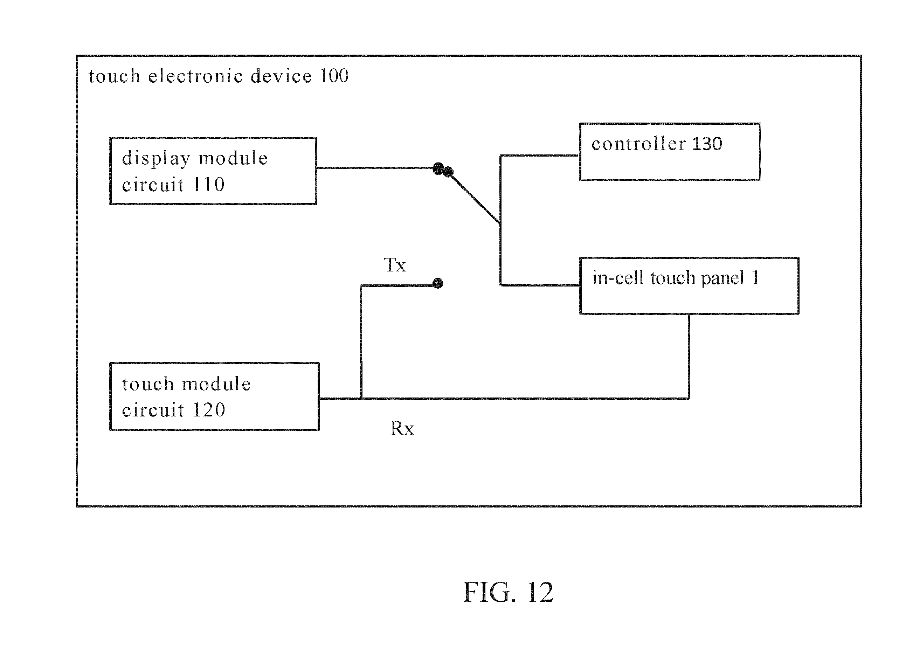

Please refer to FIG. 1 to FIG. 12, which illustrate the method of producing in-cell touch panel and the in-cell touch panel thereof of one embodiment of the present invention. FIG. 1 illustrates a flowchart of the method of producing in-cell touch panel of one embodiment of the present invention; FIG. 2 illustrates a schematic drawing of the base layer of one embodiment of the present invention; FIG. 3 illustrates a top view drawing of the light-shading layer of one embodiment of the present invention; FIG. 4 illustrates a schematic drawing of the light-shading layer and the base layer of one embodiment of the present invention; FIG. 5 illustrates a top view drawing of the light-shading layer with the metal lines of one embodiment of the present invention; FIG. 6 illustrates a schematic drawing of the light-shading layer with the metal lines of one embodiment of the present invention; FIG. 7 illustrates a top view drawing of the color filter film layer that covers the metal lines and the light-shading layer of one embodiment of the present invention; FIG. 8 illustrates a schematic drawing of the color filter film layer that covers the metal lines and the light-shading layer of one embodiment of the present invention; FIG. 9 illustrates a top view drawing of the conductive film layer that covers the color filter film layer of one embodiment of the present invention; FIG. 10 illustrates a schematic drawing of the conductive film layer that covers the color filter film layer of one embodiment of the present invention; FIG. 11 illustrates a schematic drawing of the in-cell touch panel of one embodiment of the present invention; FIG. 12 illustrates a circuit structure of the touch electronic device of one embodiment of the present invention.

As shown in FIG. 1, FIG. 11 and FIG. 12, the method of producing in-cell touch panel of the present embodiment is used for producing an in-cell touch panel 1 of a touch electronic device 100 (such as a smartphone or a tablet computer). The in-cell touch panel 1 is electrically connected to other electronic elements in the touch electronic device 100, such as a display module circuit 110, a touch module circuit 120, and a controller 130. In the method of producing in-cell touch panel of the present embodiment, the first step is executing Step 101: providing a base layer, wherein the base layer includes an inner side.

As shown in FIG. 2, according to one embodiment of the present invention, a base layer 10 is provided, wherein the base layer 10 includes an inner side 11 and an outside 12. In the present invention, the inner side 11 faces away from the user an external user, and the outside 12 faces the user such that the user can touch it. The base layer 10 of the present invention is a glass substrate. However, the type of the base layer 10 is not limited to the glass substrate.

Next is Step 102: providing a light-shading layer, wherein the light-shading layer is located on the inner side, and the light-shading layer includes a light-shading area and a plurality of holes.

As shown in FIG. 3 and FIG. 4, a light-shading layer 20 is provided, wherein the light-shading layer 20 is located on the inner side 11 of the base layer 10. The light-shading layer 20 of the present invention may be a black matrix. The light-shading layer 20 includes a light-shading area 21 and a plurality of holes 22. The light-shading area 21 is used for covering the area that does not need to be light transmissive. The plurality of holes 22 are used for allowing the passage of light.

Next is Step 103: providing a plurality of metal lines, wherein the plurality of metal lines are located on the light-shading area and do not cover the plurality of holes.

As shown in FIG. 5 and FIG. 6, a plurality of metal lines 30, 30a are provided, wherein the plurality of metal lines 30, 30a are located on the light-shading area 21 and do not cover the plurality of holes 22. Therefore, the plurality of metal lines 30, 30a do not shield the light that penetrates through the plurality of holes 22, allowing the in-cell touch panel 1 to have high light penetration. The connecting metal lines 30, 30a form a plurality of conduction areas 31, 31a with a capacitance function, wherein the two conduction areas 31 are separate from each other, and the connecting conduction areas 31a form a vertical axial capacitor. Because there are no metal lines 30, 30a between the two conduction areas 31 for electrically connecting the two conduction areas 31, at this moment, the two conduction areas 31 cannot electrically connect to each other. However, the electrical connection of the conduction areas 31, 31a formed by the metal lines 30, 30a of the present invention is not limited to the abovementioned description and can be changed according to the circuit requirements of the in-cell touch panel 1; for example, the metal lines 30, 30a can be designed as a large conduction area. From actual experimentation with the present invention, it is known that the resistance of the plurality of metal lines 30, 30a of the present invention is very low and the power consumption is small, such that an energy saving function can be achieved. In addition, because the power consumption is small, the electronic noise caused by the in-cell touch panel 1 is small, too.

The next step is Step 104: providing a color filter film layer, wherein the color filter film layer is located on the light-shading layer and a portion of the metal lines.

As shown in FIG. 7 and FIG. 8, the color filter film layers 40, 40a, 40b are provided. The color filter film layers 40, 40a, 40b of the present invention are color resists with transmittancy; for example, the color filter film layer 40 is a red color resist, the color filter film layer 40a is a green color resist, and the color filter film layer 40b is a blue color resist. The color filter film layers 40, 40a, 40b are located on the light-shading layer 20 and a portion of the metal lines 30 and do not cover the other portion of the metal lines 30a. When the light penetrates through the holes 22 of the light-shading layer 20, the light will continue to penetrate through the color filter film layers 40, 40a, 40b; via the color filter film layer 40, 40a, 40b of different colors, the light becomes different colors. In the embodiment of the present invention, the area that the color filter film layers 40, 40a, 40b do not cover is the part of the metal line 30a (as shown in FIG. 7) of the two separate conduction areas 31. However, the area that the color filter film layers 40, 40a, 40b of the present invention do not cover is not limited to the abovementioned description; the area can be changed according to the design requirements of the in-cell touch panel 1. In addition, the color filter film layer 40, 40a, 40b provides the functions of protection and the insulation for the covering metal lines 30.

Next is Step 105: providing a conductive film layer, wherein the conductive film layer covers the color filter film layer, the other portion of the metal lines, and the light-shading layer.

As shown in FIG. 9 and FIG. 10, a conductive film layer 50 is provided, and the conductive film layer 50 can be the common electrode (Vcom) required by the in-cell touch panel for generating an electric field. The conductive film layer 50 of the present invention is an Indium Tin Oxide layer, which includes a conductive film area 51 and a bridge area 52. The conductive film area 51 and the bridge area 52 are separate from each other. The bridge area 52 covers the metal lines 30a that are not covered by the color filter film layers 40, 40a, 40b, allowing the two separate conduction areas 31 to electrically connect to each other. Via the design for connecting the bridge area 52 and the two separate conduction areas 31, the two separate conduction areas 31 can be electrically connected to each other; via the design of the bridge area 52, each of the conduction areas 31 on the same axis can be electrically connected to each other. However, the amount of the bridge areas 52 is not limited to the abovementioned description and can be changed according to the design requirements. Because the color filter film layers 40, 40a, 40b with the insulation property are located between the conduction area 31a, the conductive film area 51 and the bridge area 52, the conduction area 31a, the conductive film area 51, and the bridge area 52 are not electrically connected to each other.

The final step is Step 106: providing a photo spacer unit, wherein the photo spacer unit is located on the conductive film layer.

As shown in FIG. 11, a photo spacer unit 60 is provided, and the photo spacer unit 60 is located on the conductive film layer 50. In the present invention, the photo spacer unit 60 is used for allowing the in-cell touch panel 1 to maintain a uniform distance from the other substrate structure. The photo spacer unit 60 is located on the conductive film area 51 of the conductive film layer 50; the location of the photo spacer unit 60 is not on the bridge area 52 to prevent interference with the electrical connection. However, the amount of the photo spacer units 60 is not limited to the abovementioned description and can be changed according to the design requirements.

Via the method of producing in-cell touch panel of the present invention, an in-cell touch panel 1 is produced. As shown in FIG. 11, the in-cell touch panel 1 of the present invention includes a base layer 10, a light-shading layer 20, a plurality of metal lines 30, 30a, a color filter film layer 40, a conductive film layer 50, and a photo spacer unit 60. The base layer 10 includes an inner side 11 and an outside 12 (as shown in FIG. 2). The inner side 11 faces away from the user an external user and the outside 12 faces the user such that the user can touch it. The base layer 10 of the present invention is a glass substrate.

As shown in FIG. 3 to FIG. 6, the light-shading layer 20 is located on the inner side 11 of the base layer 10. The light-shading layer 20 of the present invention may be a black matrix. The light-shading layer 20 includes a light-shading area 21 and a plurality of holes 22. The plurality of metal lines 30, 30a are located on the light-shading area 21 and do not cover the plurality of holes 22. The connecting metal lines 30, 30a form a plurality of conduction areas 31, 31a with the capacitance function. In the embodiment of the present invention, the plurality of metal lines 30, 30a, which are not connected to each other, form a plurality of conduction areas 31, 31a, and two of the conduction areas 31 are separate from each other.

As shown in FIG. 7 and FIG. 8, the color filter film layers 40, 40a, 40b are located on the light-shading layer 20 and a portion of the metal lines 30 and do not cover the other portion of the metal lines 30a. As shown in FIG. 9 and FIG. 10, the conductive film layer 50 includes a conductive film area 51 and a bridge area 52, wherein the conductive film area 51 and the bridge area 52 are separate from each other. The bridge area 52 covers the metal lines 30a that are not covered by the color filter film layers 40, 40a, 40b, allowing the two separate conduction areas 31 to be electrically connected to each other. As shown in FIG. 11, the photo spacer unit 60 is located on the conductive film area 51 of the conductive film layer 50, and not located on the bridge area 52.

As shown in FIG. 11 and FIG. 12, when the in-cell touch panel 1 of the present invention is actually installed in a touch electronic device 100, the in-cell touch panel 1 can be electrically connected to a controller 130 and an end of a sensing electrode (Rx) of a touch module circuit 120. The controller 130 is used for switching the circuit to allow the in-cell touch panel 1 to be electrically connected to a display module circuit 110 or for switching the circuit to allow the in-cell touch panel 1 to be electrically connected to an end of a driving electrode (Tx) of the touch module circuit 120, such that the in-cell touch panel 1 is electrically connected to the sensing electrode and the driving electrode of the touch module circuit 120, to form a complete touching circuit. When the controller 130 switches the circuit to allow the in-cell touch panel 1 to be electrically connected to the display module circuit 110, the controller 130 also controls the conductive film layer 50 to allow the conductive film layer 50 to be the common electrode required by the in-cell touch panel for generating an electric field. Therefore, the conductive film layer 50 that is used as the common electrode generates an electric field with the display module circuit 11. The electric field can change the axial direction of the liquid crystal molecules of the liquid crystal display (not shown in the figure) of the touch electronic device 100 to adjust the incident light direction of the liquid crystal display. When the controller 130 switches the circuit to allow the in-cell touch panel 1 to be electrically connected to the sensing electrode and the driving electrode of the touch module circuit 120, the signals of the sensing electrode and the driving electrode can be transferred to the conductive film layer 50 of the in-cell touch panel 1, whereby the conductive film layer 50 can have the sensing and touching function.

Via the method of producing in-cell touch panel of the present invention, an in-cell touch panel 1 can be produced via a relatively easy process, such that the cost is reduced. The in-cell touch panel 1 that is produced via the method of producing an in-cell touch panel of the present invention has high transmittance, a great energy saving effect, and lower noise. In addition, the metal lines 30 of the present invention can form a capacitive touch element of an axial direction, and the connection between the metal lines 30a and the bridge area 52 forms a capacitive touch element of another axial direction; therefore, the in-cell touch panel 1 can form a complete touch panel. In addition, via the coordination of the in-cell touch panel 1 and the controller 130, the in-cell touch panel 1 can have the function of the common electrode or sensing for touching.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

Irrespective of any specific reference in a dependent claim, all dependent claims refer to any previous claim in any combination.

## Claims

1. A method of producing in-cell touch panel, comprising:
providing a base layer (10), wherein the base layer (10) comprises an inner side (11);
providing a light-shading layer (20), wherein the light-shading layer (20) is located on the inner side (11), and the light-shading layer (20) comprises a light-shading area (21) and a plurality of holes (22) ;
providing a plurality of metal lines (30, 30a), wherein the plurality of metal lines (30, 30a) are located on the light-shading area (21) and do not cover the plurality of holes (22);
providing a color filter film layer (40), wherein the color filter film layer (40) is located on the light-shading layer (20) and a portion of the plurality of metal lines (30); and
providing a conductive film layer (50), wherein the conductive film layer (50) covers the color filter film layer (40), the other portion of the plurality of metal lines (30a), and the light-shading layer (20).

2. The method of producing in-cell touch panel as claimed in Claim 1, wherein the plurality of metal lines (30, 30a) form a plurality of conduction areas (31, 31a), and two of the plurality of conduction areas (31) are separate from each other.

3. The method of producing in-cell touch panel as claimed in Claim 2, wherein the conductive film layer (50) further comprises a conductive film area (51) and at least one bridge area (52), the conductive film area (51) is separated from the least one bridge area (52), and the at least one bridge area (52) is connected to the two separate conduction areas (31).

4. The method of producing in-cell touch panel as claimed in Claim 3, further comprising:
providing a photo spacer unit (60), wherein the photo spacer unit (60) is located on the conductive film layer (50).

5. The method of producing an in-cell touch panel as claimed in Claim 4, wherein the photo spacer unit (60) is located on the conductive film area (51).

6. An in-cell touch panel (1), comprising:
a base layer (10), comprising an inner side (11);
a light-shading layer (20), located on the inner side, the light-shading layer (20) comprising a light-shading area (21) and a plurality of holes (22);
a plurality of metal lines (30, 30a), located on the light-shading area (21) and not covering the plurality of holes (22);
a color filter film layer (40), located on the light-shading layer (20) and a portion of the plurality of metal lines (30); and
a conductive film layer (50), covering the color filter film layer (40), the other portion of the plurality of metal lines (30a), and the light-shading layer (20).

7. The in-cell touch panel as claimed in Claim 6, wherein the plurality of metal lines (30, 30a) form a plurality of conduction areas (31, 31a), and two of the plurality of conduction areas (31) are separate from each other.

8. The in-cell touch panel as claimed in Claim 7, wherein the conductive film layer (50) further comprises a conductive film area (51) and at least one bridge area (52), the conductive film area (51) is separated from the at least one bridge area (52), and the at least one bridge area (52) is connected to the two separate conduction areas (31).

9. The in-cell touch panel as claimed in Claim 8, further comprising a photo spacer unit (60), wherein the photo spacer unit (60) is located on the conductive film layer (50).

10. The in-cell touch panel as claimed in Claim 9, wherein the photo spacer unit (60) is located on the conductive film area (51).
